# EUROPEAN PATENT APPLICATION

(11) **EP 3 413 551 A1**
(43) Date of publication of application: **12.12.2018**
(21) Application number: 18174360.0
(22) Date of filing: 25.05.2018
(51) Int. Cl.: H04N 1/00

(54) **IMAGE FORMING APPARATUS AND IMAGE FORMING METHOD**

(30) Priority: 08.06.2017 JP 2017113694
(71) Applicant: Kabushiki Kaisha Toshiba, Tokyo 105-8001 (JP); Toshiba TEC Kabushiki Kaisha, Tokyo 141-8562 (JP)
(72) Inventor: MORI, Shinya, Shinagawa-ku,, Tokyo 141-8562 (JP)
(74) Representative: Takeuchi, Maya

(57) **Abstract**

An image forming apparatus includes a scanner configured to capture an image of a target object and generate image data from the captured image, a processor configured to recognize a character from the image data, select and apply a font type to the character, select and apply a background image to the character, and generate converted image data that includes the selected font and the selected background image applied to the character, and an image output device configured to output an image generated from the converted image data.

## Description

### FIELD

The present invention relates to the field of an image forming technology in general, and embodiments described herein relate in particular to an image forming apparatus and an image forming method.

### BACKGROUND

An example of an image forming apparatus includes a multi-function peripheral (MFP). The image forming apparatus includes a scanner that captures an image of an original document, an OCR processing unit that recognizes characters in the image generated by the scanner, a printer that prints the image generated by the scanner or the character recognized by the OCR processing unit.

To perform an OCR process on a handwritten original document, the MFP may be used. The handwritten original document is captured by the scanner, and characters written on the document are recognized by the OCR processing unit, and are converted into a predetermined font. Thereafter, printing is performed by the printer. Using the MFP, it is possible to revise the characters recognized by the OCR processing unit, and to make the background white.

In the MFP, however, it is possible to reliably reproduce the handwritten original document and revise the characters recognized by the OCR processing unit, and to make the background white, but the changes that can be made are limited.

For example, in a store where a lot of commodities are displayed, when an advertisement for commodity sales promotion or a point of purchase advertising (POP) such as a price tag is printed using an MFP, work becomes complicated because of the limitation in making changes to the advertisement or the price tag.

To solve such problem, there is provided an image forming apparatus, comprising:
a scanner configured to capture an image of a target object and generate image data from the captured image;
a processor configured to recognize a character from the image data, select and apply a font type to the character, select and apply a background image to the character, and generate converted image data that includes the selected font and the selected background image applied to the character; and
an image output device configured to output an image generated from the converted image data.

Preferably, the processor is configured to also select and apply a font size and a font color to the character, and the converted image data also includes the selected font size and the selected font color applied to the character.

Preferably still, the processor is configured to also change a position and an angle of the character, and the converted image data contains information about the changed position and the changed angle.

Preferably yet, the processor selects the font type and the background image randomly.

Suitably, the processor selects the font type and the background image based on date and time information.

Suitably still, the image output device is a display.

Suitably yet, the image output device is a printer.

Typically, the target object is a handwritten document.

Typically still, the printer outputs the image onto a sales promotion.

Typically yet, the printer outputs the image onto a price tag.

The invention also relates to an image forming method, comprising the steps of:
(a) capturing an image of a target object and generating image data from the captured image;
(b) performing optical character recognition on the image data to recognize a character in the image data;
(c) randomly selecting and applying a font type to the character;
(d) randomly selecting and applying a background image to the character;
(e) generating converted image data that includes the selected font type and the selected background image applied to the character;
(f) repeating steps (c), (d), and (e) at least one time;
(g) displaying images generated from the converted image data for selection; and
(h) printing the selected image.

Preferably, in steps (c) and (d), the font type and the background image are randomly selected based on date and time information.

Preferably still, in the method, the target object is a handwritten document.

Preferably yet, in the method, the selected image is printed on a sales promotion.

Suitably, in the method, the selected image is printed on a price tag.

The invention further relates to an image forming method, comprising the steps of:
capturing an image of a target object and generating image data from the captured image;
performing optical character recognition on the image data to recognize a character in the image data;
randomly selecting and applying a font type to the character;
randomly selecting and applying a background image to the character;
generating converted image data that includes the selected font type and the selected background image applied to the character; and
printing an image generated from the converted image data.

Preferably, the method further comprises:
randomly selecting and applying a font size and a font color to the character, wherein
the converted image data also includes the selected font size and the selected font color applied to the character.

Preferably still, the method further comprises:
changing a position and an angle of the character, wherein
the converted image data contains information about the changed position and the changed angle.

Preferably yet, in the method, the image is printed on a sales promotion.

Suitably, in the method, the image is printed on a price tag.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a system block diagram of an image forming apparatus and an image reading device according to one embodiment.
FIG. 2 is a flowchart illustrating an operation example of the image forming apparatus and the image reading device.
Fig. 3 is a diagram illustrating a handwritten original document.
FIG. 4 is a diagram illustrating a display example of a control panel.
FIG. 5 is a diagram illustrating a design example in which a character size, and a position and an angle of a character are changed.

### DETAILED DESCRIPTION

Embodiments provide an image forming apparatus that are capable of generating a printed material of a particular font and background from a handwritten original document.

In general, according to an embodiment, there is provided an image forming apparatus including a scanner configured to capture an image of a target object and generate image data from the captured image, a processor configured to recognize a character from the image data, select and apply a font type to the character, select and apply a background image to the character, and generate converted image data that includes the selected font and the selected background image applied to the character, and an image output device configured to output an image generated from the converted image data.

Hereinafter, the image reading device and the image forming apparatus according to the embodiments will be described with reference to the drawings. In each drawing, the same marks are attached to the same components.

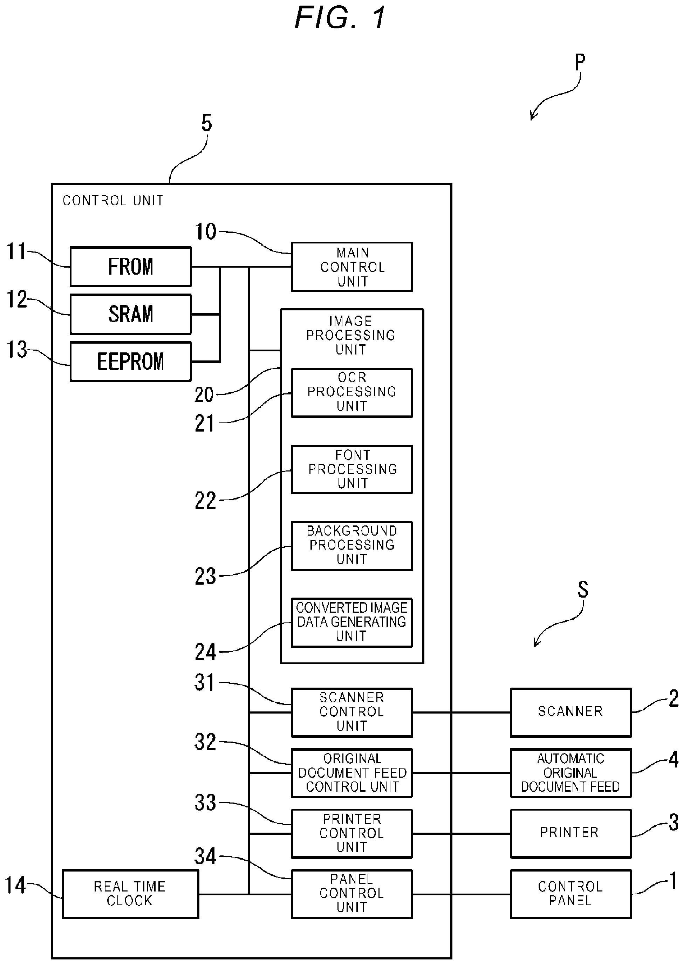

FIG. 1 is a system block diagram of the image forming apparatus and the image reading device according to the embodiments.

An image reading device S according to the embodiment includes a control panel 1, a scanner 2, an automatic original document feeder 4, and a control unit 5. An image forming apparatus P according to the embodiment includes the image reading device S and a printer 3.

The control panel (also referred to as an operation unit) 1 receives an input from an operator. In the control panel 1, a display and an operation button are disposed.

The image forming apparatus P operates according to the input from the operator. On the display, an operation guide, operation contents, an operation result, and the like are displayed.

The scanner 2 captures an image of a copy target material and generates image data from the captured image. The scanner 2 outputs the image data to the control unit 5.

The printer 3 forms a toner image by a developer including a toner or the like, based on the image data generated by the scanner 2 or the image data from the outside or the like.

The printer 3 transfers the toner image onto a surface of a sheet (not illustrated). The printer 3 fixes the toner image onto the sheet by applying heat and pressure to the toner image on the surface of the sheet.

To the printer 3, sheets, for example, A4 sized sheets or A8 sized sheets, are sequentially supplied from a sheet supply unit (not illustrated).

In addition, the automatic original document feeder 4 sequentially supplies original sheets toward the scanner 2.

If the operator places a handwritten original document on the automatic original document feeder 4, the handwritten original document is supplied toward the scanner 2.

The control unit 5 controls the scanner 2, the printer 3, the automatic original document feeder 4, and the like, based on inputs made on the control panel 1.

Next, the detailed configuration of the control unit 5 will be described.

The control unit 5 includes a main control unit 10, a FROM 11, an SRAM 12, an EEPROM 13, and a real time clock 14.

The main control unit 10 is a central processing unit (CPU). The main control unit 10 manages various arithmetic processes in the control unit 5.

The FROM 11 is a nonvolatile memory in which the contents are stored even when a power supply is turned off. In the FROM 11, for example, information such as various fonts, a character color, or a background color is stored.

The SRAM 12 is a volatile memory in which reading and writing are possible, and retains temporarily the data.

The EEPROM 13 is a nonvolatile memory in which the written data is electrically deleted, and rewriting is possible.

The real time clock 14 continues to count the time by battery backup, even if the power supply is turned off.

The control unit 5 includes an image processing unit 20, a scanner control unit 31, an original document feeder control unit 32, a printer control unit 33, and a panel control unit 34.

The image processing unit 20 performs processing or conversion of the image data. Converted image data is generated from the image data generated by the scanner control unit 31, and the converted image data is output to the printer control unit 33 or the like.

The image processing unit 20 performs the processing or the conversion of the image data, and includes an OCR processing unit 21, a font processing unit 22, a background processing unit 23, and a converted image data generating unit 24.

The OCR processing unit (also referred to as a character recognition processing unit) 21 recognizes characters that are included in the image data generated by the scanner 2, and outputs the information of the character.

The font processing unit 22 selects and applies any of the fonts stored in the FROM 11, to the character information output by the OCR processing unit 21.

The background processing unit 23 selects and applies any of the colors stored in the FROM 11, as a background image of the character information output by the OCR processing unit 21.

The converted image data generating unit 24 generates image data (referred to herein as converted image data B), based on the information from the font processing unit 22 and the background processing unit 23.

The scanner control unit 31 controls the scanner 2 to output the image data generated by the scanner 2 to the image processing unit 20.

The original document feeder control unit 32 controls the automatic original document feeder 4 to supply the handwritten original document or the like to the scanner 2.

The printer control unit 33 controls the printer 3 and the sheet supply unit to print the image data which is output from the image processing unit 20 on the sheet.

The panel control unit (also referred to as an image output unit) 34 controls the control panel 1. The panel control unit 34 controls the control panel 1 to output the input information from the operation buttons of the control panel 1 to the image processing unit 20. The panel control unit 34 controls the control panel 1 to display the image data which is output from the image processing unit 20, on the display of the control panel 1. Furthermore, the panel control unit 34 controls the control panel 1 to display a timepiece on the display of the control panel 1, based on the information from the real time clock 14.

Next, image reading and image forming by the image forming apparatus P (image reading device S) will be described.

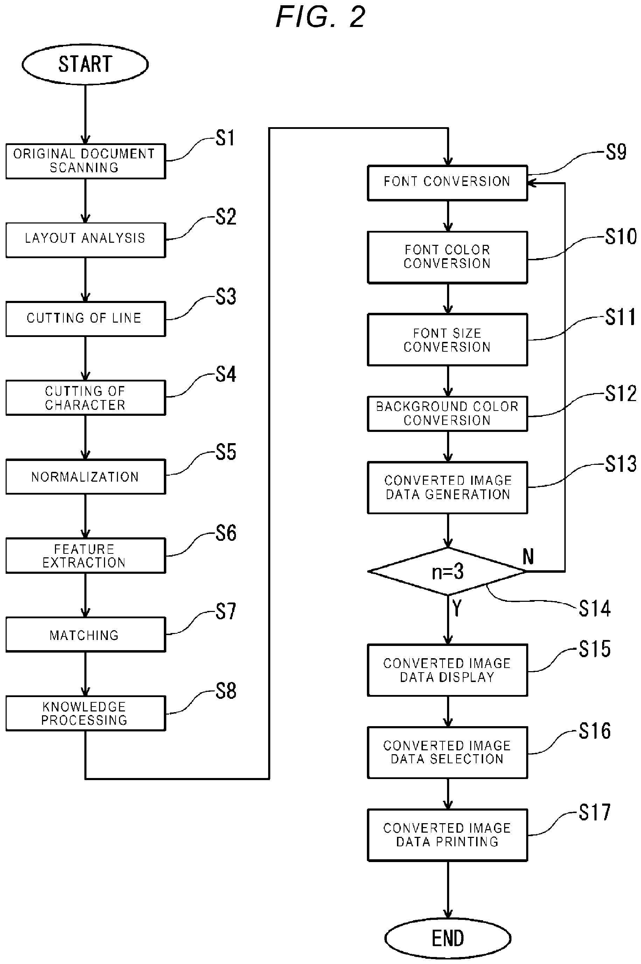

FIG. 2 is a flowchart illustrating an operation example of the image forming apparatus and the image reading device according to one embodiment.

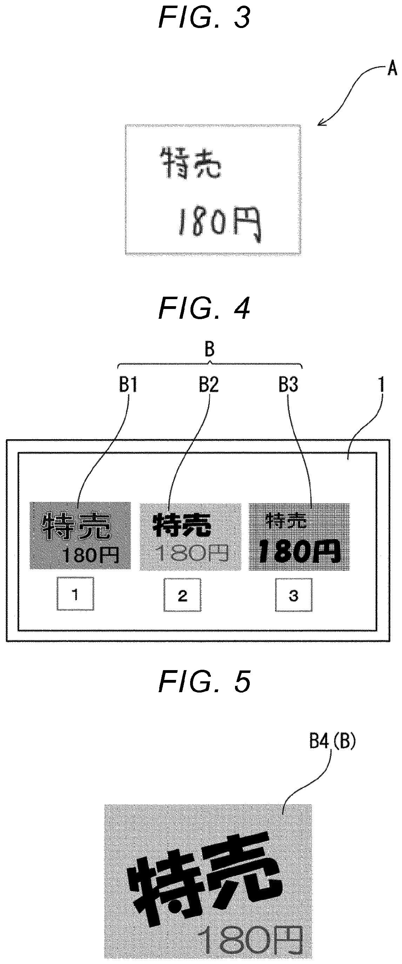

Fig. 3 is a diagram illustrating the handwritten original document.

FIG. 4 is a diagram illustrating a display example of the control panel.

The image reading and the image forming by the image forming apparatus P are started, when a start button of the control panel 1 is pressed.

In the example described herein, the operator places a handwritten original document A on the automatic original document feeder 4, and then presses the start button. FIG. 3 illustrates an example of the handwritten original document A, in which two character strings of " 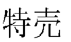 (special sale)" and " 1 8 0 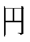 (180 yen)" are written. The background of the handwritten original document A is white.

### S1: Original Document Scanning

If the start button is pressed, the original document feeder control unit 32 controls the automatic original document feeder 4 to feed the handwritten original document A to the scanner 2. The scanner control unit 31 controls the scanner 2 to capture the handwritten original document A and generates the image data. The scanner control unit 31 controls the scanner to output the generated image data to the image processing unit 20.

### S2 to S4: OCR Processes

Next, the image processing unit 20 starts a process to recognize characters that are included in the image data generated by the scanner 2, in the OCR processing unit 21. In other words, the OCR process in which the characters of " 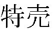 (special sale)" and " 1 8 0 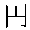 (180 yen)" are recognized, is started.

In the OCR process, the following processes (S2 to S4) are performed.

### S2: Layout Analysis

In the OCR process, first, a layout analysis is performed. The layout analysis is the process by which a region in which text characters are located is identified within the image data generated by the scanner 2. By analyzing the layout, it can be possible to separate the text characters from surrounding, non-textual image elements.

### S3: Cutting of Line

Next, cutting of a line is performed. The cutting of a line is the process for extracting characters in one line, from the image data generated by the scanner 2.

### S4: Cutting of Characters

Next, the cutting of characters is performed. The cutting of characters is the process for extracting each of the characters from the character string of the line which has been extracted in S3.

### S5 to S8: Character Recognition

Next, in the OCR processing unit 21, the character recognition is started. The character recognition is the process for recognizing the characters which have been extracted in S4 one by one.

In the character recognition, the following processes (S5 to S8) are performed, in order to accurately perform the character recognition in accordance with a size of the character and a font selection of the character, and also potentially accounting for blurring or other obscuring of the character.

### S5: Normalization

Normalization is the process for resizing the recognized character to fit into a shape (e.g., a square) of a fixed size. The normalization corrects for any deformation (e.g., vertically elongated shape, horizontally stretched shape, or the like) of the character by resizing the character to fit into a shape having a fixed size, and facilitates post-processing.

### S6: Feature Extraction

Feature extraction is the process of decomposing the normalized character into four directional components of such as up and down (vertical) directional elements, right and left (horizontal) directional elements, and oblique directional (tilted) components and extracting these directional components as a feature for recognizing the character. For example, a single character may be converted into 196 feature values.

### S7: Matching

Matching is the process for comparing the feature values of the character extracted in S6 with feature values of standard character patterns that have been registered in advance.

The feature values of standard character patterns are made by averaging the feature values of characters in various fonts. Thereby, it is possible to perform the comparing without being influenced too heavily by the particular font of the character being recognized, and also blurring or other obscuring of the character being evaluated.

### S8: Knowledge Processing

Knowledge processing is the process for automatically correcting a misrecognized word or character by comparing the recognized word or character to candidate entries of a dictionary which is generated in advance. For example, a just recognized word or character may be evaluated for correctness based on its surrounding context within previously recognized words of a sentence or paragraph. In some instances, characters within a word may be evaluated according to the surrounding letters within the same word.

### S9 to S13: Image Data Generation

Next, the image processing unit 20 generates an image data of a predetermined format from a recognition result by the OCR processing unit 21 and outputs the image data. For example, the image processing unit 20 outputs the image data in a JPEG format or a GIF format.

In the image data generation, the following processes (S9 to S13) are performed.

### S9: Font Conversion

In the image processing unit 20, the font processing unit 22 changes the font type of the character which is recognized by the OCR processing unit 21. That is, a font type is randomly selected and applied to the character which is recognized through the OCR processing unit 21.

Specifically, the font processing unit 22 generates a random number using the real time clock 14. The font type corresponding to the random number is selected, from a plurality of font types which are stored in the FROM 11. For example, Gothic typeface is selected for the font of " 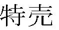 (special sale)", and Mincho typeface is selected for the font of " 1 8 0 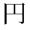 (180 yen)".

### S10: Font Color Conversion

In the image processing unit 20, the font processing unit 22 changes the color of the character which is recognized by the OCR processing unit 21. That is, an arbitrary character color can be selected and applied to the character which is recognized through the OCR processing unit 21.

Specifically, the font processing unit 22 generates a random number by using the real time clock 14. The character color corresponding to the random number is selected, from a plurality of character colors which are stored in the FROM 11. For example, red is selected for the font color of " 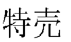 (special sale)", and black is selected for the font color of " 1 8 0 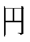 (180 yen)".

Here, the character "color" choices also includes the possibility of adopting particular patterns or patterning, such as cross-hatching, repetitive image patterns or the like. In other words, the recognized character can be changed into any arbitrary pattern in addition to or instead of changed into a different color.

### S11: Font Size Conversion

In the image processing unit 20, the font processing unit 22 changes the font size of the character which is recognized by the OCR processing unit 21. That is, an arbitrary font size can be selected and applied to the character which is recognized through the OCR processing unit 21.

Specifically, the font processing unit 22 generates a random number by using the real time clock 14. The font size corresponding to the random number is selected, from the plurality of character colors which are stored in the FROM 11. For example, 48 point size is selected for the font size of " 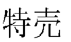 (special sale)", and 28 point size is selected for the font size of" 1 8 0 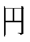 (180 yen)".

### S12: Background Color Conversion

In the image processing unit 20, the background processing unit 23 selects and applies the background color of the image data. That is, a background color is randomly selected and applied, as a background image of the character which is recognized through the OCR processing unit 21.

Specifically, the background processing unit 23 generates a random number by using the real time clock 14. The background color corresponding to the random number is selected, from a plurality of background colors which are stored in the FROM 11. For example, light blue is selected for the background color.

Here, the possible background "color" variations also includes adopting possible patterns or patterning instead of or in addition to color changes. In other words, the background of the image data can be changed into any arbitrary pattern.

### S13: Converted Image Data Generation

In the image processing unit 20, the converted image data generating unit 24 generates the converted image data B, based on the information from the font processing unit 22 and the background processing unit 23. In other words, the converted image data B is generated in accordance with the processed contents of S9 to S12.

For example, in the converted image data B, the character string of 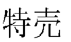 " (special sale)" is formed by Gothic typeface, red, and 48 point size. The character string of " 1 8 0 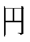 (180 yen)" is formed by Mincho typeface, black, and 28 point size. The character strings of " 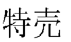 (special sale)" and " 1 8 0 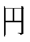 (180 yen)" are disposed at the same positions as written positions of the handwritten original document A. The background of the converted image data B is colored in light blue.

In this manner, the image processing unit 20 performs the process or the conversion of the image data, at the time of the image data generation. In other words, the image processing unit 20 generates the converted image data B in which the character or the background of the handwritten original document A is automatically adapted to a random type. The image processing unit 20 outputs the converted image data B in a predetermined image format.

### S14: Repetition of Image Data Generation

Next, the image processing unit 20 determines whether or not to further generate the converted image data B. For example, when three pieces of converted image data B1 to B3 are generated, the number of times of generating the image data is counted, and S9 to S13 are repeated three times.

Therefore, the image processing unit 20 outputs the three pieces of the converted image data B1 to B3 to the panel control unit 34.

### S15: Converted Image Data Display

Next, the panel control unit 34 controls the display of the control panel 1 to display the three pieces of the converted image data B1 to B3. In other words, the three pieces of the converted image data B1 to B3 are displayed such that the operator can visually recognize the three pieces of the converted image data B1 to B3.

As illustrated in FIG. 4, on the display of the control panel 1, three of the converted image data B1 to B3 are displayed side by side in a row. Moreover, on the display of the control panel 1, three buttons for selecting the converted image data B1 to B3 are displayed on a front side thereof.

In this manner, the image reading by the image forming apparatus P is completed. Subsequently, the image forming by the image forming apparatus P is performed.

### S16: Converted Image Data Selection

The operator selects the converted image data to be printed. That is, the operator presses any one of the three selection buttons which are displayed on the display of the control panel 1.

The control panel 1 receives the input from the operator, and the panel control unit 34 outputs the input information to the printer control unit 33. For example, the converted image data B1 is selected.

### S17: Converted Image Data Printing

Finally, the printer control unit 33 prints the converted image data B which is selected by the operator, based on the information from the panel control unit 34.

The printer control unit 33 controls the printer 3 and the sheet supply unit, and prints the converted image data B which is output from the image processing unit 20 on the sheet. For example, the converted image data B1 is printed. A plurality of converted image data B1 may be printed on one sheet.

In this manner, the image forming by the image forming apparatus P is completed.

FIG. 5 is a diagram illustrating a design example in which the character size, and a position and an angle of the character are changed.

In the converted image data generation of S13, the converted image data generating unit 24 of the image processing unit 20 may change the position and the angle of each character string.

Specifically, when the character strings are overlapped with each other, the position and the angle of one character string are changed, or the positions and the angles of both character strings are changed. The character string is rotated around a center thereof, or the character string is moved into the up and down directions and the right and left directions.

When the angle of the character string is changed, the converted image data generating unit 24 generates a random number by using the real time clock 14, and applies an angle corresponding to the random number, as a display angle of the character string. For example, as illustrated in FIG. 5, the converted image data generating unit 24 rotates the characters of " 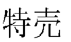 (special sale)" counterclockwise, and moves the characters of " 1 8 0 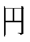 (180 yen)" to the right side.

As described above, the image reading device S includes the font processing unit 22, the background processing unit 23, and the converted image data generating unit 24. After capturing the handwritten original document A and recognizing the character, the image reading device S generates the converted image data in which the recognized character or the background thereof is automatically converted.

Accordingly, it is possible to easily obtain the converted image data B to which various changes are applied.

The font processing unit 22 selects and applies the character size, the character color, and the character pattern to the recognized character. Therefore, it is possible to obtain greatly enhanced characters.

The converted image data generating unit 24 adjusts the character angle of the character which is designed in the font processing unit 22. Therefore, it is possible to prevent the character strings from being overlapped with each other. It is possible to obtain the converted image data B to which further changes are applied.

The panel control unit 34 controls the display of the control panel 1 to display the plurality of pieces of converted image data B1 to B3 side by side. Thereby, the operator can select the converted image data B which is suitable for a preference of the operator.

The image forming apparatus P prints the converted image data B which is selected by the operator, by the printer 3. Therefore, for example, when an advertisement for commodity sale promotion or a POP such as a price tag is made, it is possible to greatly reduce and simplify workload of the operator.

The font processing unit 22 and the background processing unit 23 may specify a current season based on date and time information from the real time clock 14, and may select and apply the color or the pattern according to the season.

For example, pink or a cherry blossom pattern is selected and applied for spring, blue or a Polka dot pattern is selected and applied for summer, red or an autumn leaves pattern is selected and applied for autumn, and white or a snow pattern is selected and applied for winter.

The information such as various fonts, the character color, or the background color is not limited to a case where the information is stored in the FROM 11. A hard disk in which the information such as various fonts, the character color, or the background color is stored may be connected to the control unit 5. Furthermore, the control unit 5 may include an external connection unit that is connected to an external network such as the Internet, and may obtain the information such as various fonts, the character color, or the background color through the Internet.

In the converted image data selection of S16, if the converted image data B which is suitable for the preference of the operator does not exist, the image data generation of S9 to S13 may be performed again.

The image processing unit 20 may record generation history information of the converted image data B. The converted image data generating unit 24 generates new converted image data B, based on the generation history information. In other words, the converted image data B which is suitable for the preference of the operator is recorded. Thereby, when the new converted image data B is generated, it is possible to generate the converted image data B which is highly likely to be selected by the operator, and it is possible to more efficiently make the POP or the like.

The converted image data B is not limited to a case of being displayed or output on the display of the control panel 1. The converted image data B may be displayed on an external display.

The converted image data B is not limited to a case of being displayed such that the operator can visually recognize the converted image data B by the panel control unit 34. For example, the printer control unit 33 may control the printer to print a thumbnail image of the converted image data B from the printer 3.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image forming apparatus, comprising:
a scanner_configured to capture an image of a target object and generate image data from the captured image;
a processor configured to recognize a character from the image data, select and apply a font type to the character, select and apply a background image to the character, and generate converted image data that includes the selected font and the selected background image applied to the character; and
an image output device configured to output an image generated from the converted image data.

2. The apparatus according to claim 1, wherein the processor is configured to also select and apply a font size and a font color to the character, and the converted image data also includes the selected font size and the selected font color applied to the character.

3. The apparatus according to claim 1 or 2, the processor is configured to also change a position and an angle of the character, and the converted image data contains information about the changed position and the changed angle.

4. The apparatus according to any one of claims 1 to 3, wherein the processor selects the font type and the background image randomly.

5. The apparatus according to claim 4, wherein the processor selects the font type and the background image based on date and time information.

6. The apparatus according to any one of claims 1 to 5, wherein the image output device is a display.

7. The apparatus according to any one of claims 1 to 5, wherein the image output device is a printer.

8. The apparatus according to any one of claims 1 to 7, wherein the target object is a handwritten document.

9. An image forming method, comprising steps of:
(a) capturing an image of a target object and generating image data from the captured image;
(b) performing optical character recognition on the image data to recognize a character in the image data;
(c) randomly selecting and applying a font type to the character;
(d) randomly selecting and applying a background image to the character;
(e) generating converted image data that includes the selected font type and the selected background image applied to the character;
(f) repeating steps (c), (d), and (e) at least one time;
(g) displaying images generated from the converted image data for selection; and
(h) printing the selected image.

10. The method according to claim 9, wherein in steps (c) and (d), the font type and the background image are randomly selected based on date and time information.

11. The method according to claim 9 or 10, wherein the target object is a handwritten document.

12. An image forming method, comprising the steps of:
capturing an image of a target object and generating image data from the captured image;
performing optical character recognition on the image data to recognize a character in the image data;
randomly selecting and applying a font type to the character;
randomly selecting and applying a background image to the character;
generating converted image data that includes the selected font type and the selected background image applied to the character; and
printing an image generated from the converted image data.

13. The method according to claim 12, further comprising:
randomly selecting and applying a font size and a font color to the character, wherein
the converted image data also includes the selected font size and the selected font color applied to the character.

14. The method according to claim 12 or 13, further comprising:
changing a position and an angle of the character, wherein
the converted image data contains information about the changed position and the changed angle.
